# EUROPEAN PATENT APPLICATION

(11) **EP 4 202 763 A1**
(43) Date of publication of application: **28.06.2023**
(21) Application number: 21306916.4
(22) Date of filing: 23.12.2021
(51) Int. Cl.: G06K 19/077, G06K 19/02

(54) **SMARTCARDS WITH METAL LAYERS**

(71) Applicant: Thales Dis France SAS, 92190 Meudon (FR)
(72) Inventor: SUBRA, Sébastien, 13600 LA CIOTAT (FR); MERIDIANO, Jean-Luc, 13600 LA CIOTAT (FR); COLOMBARD, Claude, 13600 LA CIOTAT (FR); MILANINI, Stéphanie, 13600 LA CIOTAT (FR)
(74) Representative: Castelo, Jérôme

(57) **Abstract**

A data carrier (1, 1', 1") comprises at least a first metallic layer (2, 2', 2"), at least one electronic module (4, 4', 4"), at least one antenna (5, 5', 5"), and at least a second metallic layer (3, 3', 3"). The second metallic layer (3, 3', 3") is arranged after the first metallic layer (2, 2', 2") with respect to an extension direction (E). The antenna (5, 5', 5") is in connection with the electronic module (4, 4', 4"). The first metallic layer (2, 2', 2") is a continuous metallic layer delimiting a recess (6, 6', 6"), and wherein the electronic module (4, 4', 4") is at least partially arranged within said recess (6, 6', 6").

## Description

### TECHNICAL FIELD

The present invention relates to a data carrier according to claim 1, to a secure article comprising or consisting of such a data carrier according to claim 14, and to a method of producing a data carrier according to claim 15.

### PRIOR ART

Data carriers such as smart cards typically need to fulfil standard requirements such as a standard card thickness. In the case of data carriers comprising metallic layers in particular, these requirements are difficult to meet. In fact, in order to meet the requirements the known data carriers usually have metallic layers of reduced thickness or weight.

### SUMMARY OF THE INVENTION

It is an object of the present invention to overcome the drawbacks of the prior art. In particular, it is an object of the present invention to provide an optimized data carrier comprising metallic layers.

This object is achieved with a data carrier according to claim 1. In fact, a data carrier is provided which comprises at least a first metallic layer, at least one electronic module, at least one antenna, and at least a second metallic layer. The second metallic layer is arranged after the first metallic layer with respect to an extension direction. The antenna is in connection with the electronic module. The first metallic layer is a continuous metallic layer delimiting a recess, and wherein the electronic module is at least partially arranged within said recess.

The data carrier preferably is a smart card, in particular a so-called combi-card or dual interface smart card, i.e. a combination type IC card that is configured to be used in either contact and non-contact manner. As such, the electronic module preferably is an IC chip module, particularly preferably an RFID IC chip module, as it is known in the art. The antenna preferably is an RFID antenna.

The antenna preferably is a wire such as a copper wire. Furthermore, the antenna preferably has a size in the range of 19 x 24 millimeter to 40 x 70 millimeter and/or is arranged with a pitch in the range of 0.2 millimeter to 2 millimeter. However, other dimensions are likewise conceivable.

The first metallic layer being a continuous metallic layer means that the first metallic layer does not comprise any slits or the like that extend into the first metallic layer.

Since the electronic module is at least partially arranged within a recess of the first metallic layer, a thickness of the data carrier with respect to the extension direction can be reduced. As such, a reduction of the thickness of the metallic layers in order to meet standard requirements such as a standard card thickness can be dispensed with.

The data carrier defines a top side and an opposed bottom side, wherein the extension direction extends from the top side of the data carrier towards the bottom side of the data carrier.

A size of the recess preferably essentially corresponds to a size of the electronic module in the region of the arrangement of the electronic module within the recess. Additionally or alternatively, the first metallic layer preferably completely surrounds the electronic module at least in the region of arrangement of the electronic module within the recess when seen along a circumferential direction of the electronic module.

An area expansion of the first metallic layer preferably corresponds to an area expansion of the data carrier with respect to a transverse direction running perpendicularly to the extension direction.

The data carrier preferably comprises a top surface, and wherein a top surface of the first metallic layer provides the top surface of the data carrier. The top surface of the data carrier preferably provides the top side of the data carrier. Consequently, the top surface of the first metallic layer provides the top side of the data carrier. In other words, the first metallic layer preferably provides the outermost surface of the data carrier. The bottom side of the data carrier in turn is preferably provided by an overlay as it is known in the art, for instance a PVC overlay. That is, the second metallic layer is preferably not providing an outermost surface of the data carrier but is preferably arranged within the data carrier with respect to the extension direction.

The second metallic layer preferably comprises a recess. A size of the recess of the second metallic layer with respect to a transverse direction running perpendicularly to the extension direction preferably is at least the size of the antenna with respect to the transverse direction. It is furthermore preferred that the recess of the second metallic layer and the antenna are arranged essentially congruent with respect to the extension direction.

Being arranged essentially congruent means, that the recess of the second metallic layer is arranged at a position that corresponds to the position of the antenna with respect to the extension direction. In other words, the second metallic layer does not cover or overlie the antenna with respect to the extension direction. As such, a communication of the antenna towards an outside of the data carrier is enabled. Hence, the data carrier according to the invention is preferably configured for so-called backside transactions that are performed via the bottom side of the data carrier.

The second metallic layer preferably comprises at least one slit extending from an outer edge of the second metallic layer at least partially into the second metallic layer. It is particularly preferred that said slit terminates in the recess of the second metallic layer. As will be explained in greater detail below, the second metallic layer is preferably electrically conductive. The slit in the second metallic layer serves the purpose of improving a coupling between the antenna and the second metallic layer. The coupling between the second metallic layer and the antenna preferably is an inductive coupling and/or based on eddy currents.

The antenna is preferably at least partially arranged within the first metallic layer, in particular within a further recess of the first metallic layer. Alternatively, the antenna is preferably at least partially arranged within the second metallic layer, in particular within the recess of the second metallic layer.

In this respect it is preferred that the data carrier further comprises an insert element, which is preferably made from one or more polymers and/or plastics such as PVC. The antenna is preferably arranged within said insert element.

In any case it is preferred that the electronic module is assembled on the insert element comprising the antenna, and wherein an electrical connection between the electronic module and the antenna is achieved via at least one electrically conductive element such as a conductive glue, for instance silver glue or solder paste.

The data carrier preferably further comprises at least one shielding element that is configured to shield the antenna and/or the electronic module from magnetic fields. The shielding element preferably is a nickel-iron soft ferromagnetic alloy such as mu-metal.

The shielding element can be arranged between the first metallic layer and the second metallic layer with respect to the extension direction. Alternatively, the shielding element can be at least partially arranged within the first metallic layer, preferably within a further recess of the first metallic layer. Additionally or alternatively, the shielding element can at least partially be arranged within the second metallic layer, preferably within a further recess of the second metallic layer.

The shielding element can be in direct contact with the first metallic layer and/or the second metallic layer. Alternatively, the shielding element can be in indirect contact preferably via at least one adhesive element with the first metallic layer and/or the second metallic layer.

An area expansion of the shielding element preferably corresponds to an area expansion of the first metallic layer with respect to the transverse direction extending perpendicularly to the extension direction. Additionally or alternatively, a size of the shielding element is preferably at least the size of the antenna with respect to a transverse direction running perpendicularly to the extension direction.

A thickness of the first metallic layer with respect to the extension direction preferably is in the range of 50 millimeter to 90 millimeter, particularly preferably between 53.98 millimeter to 85.6 millimeter and/or fulfil a standard card format commonly known in the field of the art. A thickness of the second metallic layer with respect to the extension direction preferably is in the range of 50 millimeter to 90 millimeter, particularly preferably between 53.98 millimeter to 85.6 millimeter and/or fulfil a standard card format commonly known in the field of the art.

The first metallic layer can be electrically conductive or electrically non-conductive. The second metallic layer preferably is electrically conductive.

The first metallic layer and/or the second metallic layer preferably comprise or consist of stainless steel. However, other metallic materials are likewise conceivable. In fact, any electrically conductive material could be used for the first metallic layer and the second metallic layer.

The first metallic layer preferably comprises a top surface, and wherein at least one personalization element is provided on and/or in the top surface. The personalization element preferably is at least one image and/or at least one alphanumeric character. It is furthermore preferred that the personalization element is a print such as an inkjet print or a laser drilling.

In a further aspect a secure article comprising or consisting of at least one data carrier as mentioned above is provided. The secure article preferably is a smart card.

Any explanations made herein regarding the data carrier per se likewise apply to the secure article and vice versa.

In a further aspect a method of producing a data carrier, preferably a data carrier as described above, is provided. The method comprises the steps of i) providing at least a first metallic layer, ii) providing at least one electronic module, iii) providing at least one antenna, and iv) providing at least a second metallic layer. The second metallic layer is arranged after the first metallic layer with respect to an extension direction. The antenna is in connection with the electronic module. The first metallic layer is a continuous metallic layer delimiting a recess, and wherein the electronic module is at least partially arranged within said recess.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a sectional view of a data carrier comprising a first metallic layer, a second metallic layer, and an electronic module to be arranged within a recess in the first metallic layer according to a first embodiment;
- Fig. 2a: shows a top view of the first metallic layer of the data carrier according to figure 1;
- Fig. 2b: shows a bottom view of the first metallic layer of the data carrier according to figure 1, further comprising a shielding element;
- Fig. 2c: shows a top view of the second metallic layer according to figure 1;
- Fig. 2d: shows a top view of the second metallic layer according to figure 1, wherein an antenna and antenna pads are arranged in a recess of the second metallic layer;
- Fig. 3a: shows a top view of a first metallic layer of a data carrier according to another embodiment;
- Fig. 3b: shows a bottom view of the first metallic layer of according to figure 3a;
- Fig. 3c: shows a top view of a second metallic layer of the further data carrier, wherein the second metallic layer comprises two recesses;
- Fig. 3d: shows a top view of the second metallic layer of the further data carrier according to figure 3c, wherein a shielding element and an antenna are arranged within one of the recesses and wherein antenna pads of the antenna are arranged within the other recess;
- Fig. 4: shows a sectional view of a data carrier comprising a first metallic layer, a second metallic layer, and an electronic module to be arranged within a recess in the first metallic layer according to another embodiment.

### DESCRIPTION OF PREFERRED EMBODIMENTS

Aspects of the data carrier according to the invention shall now be explained in detail with respect to the figures.

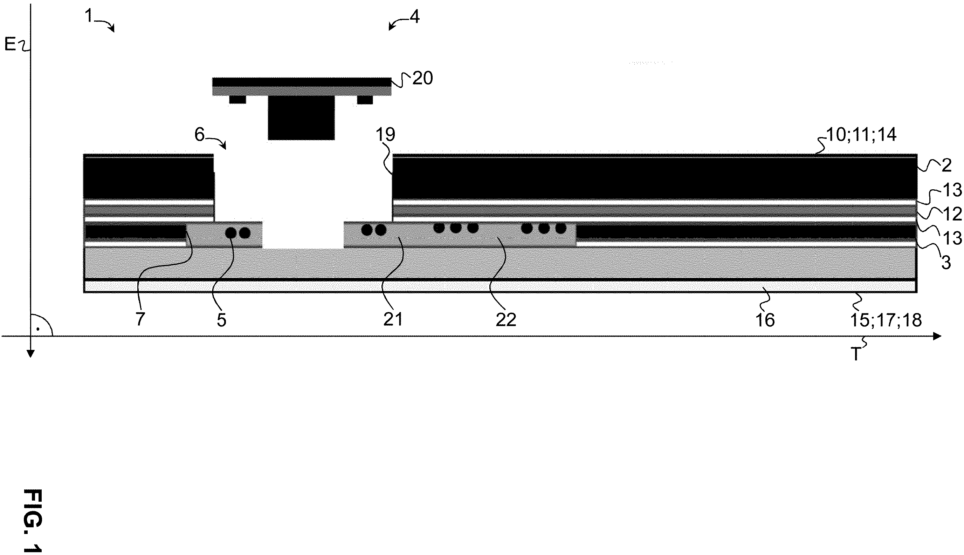

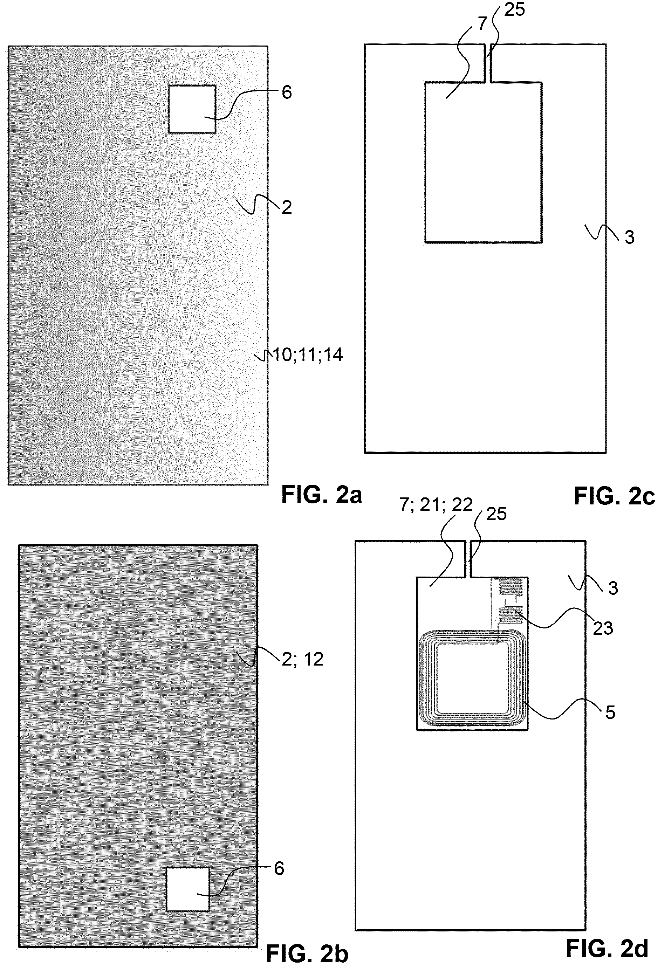

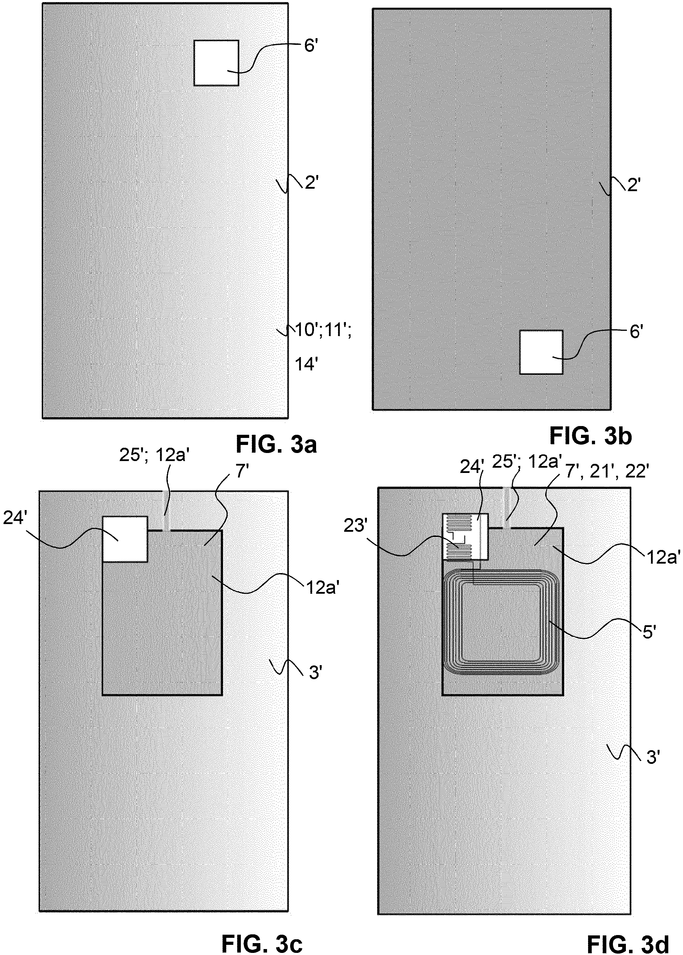

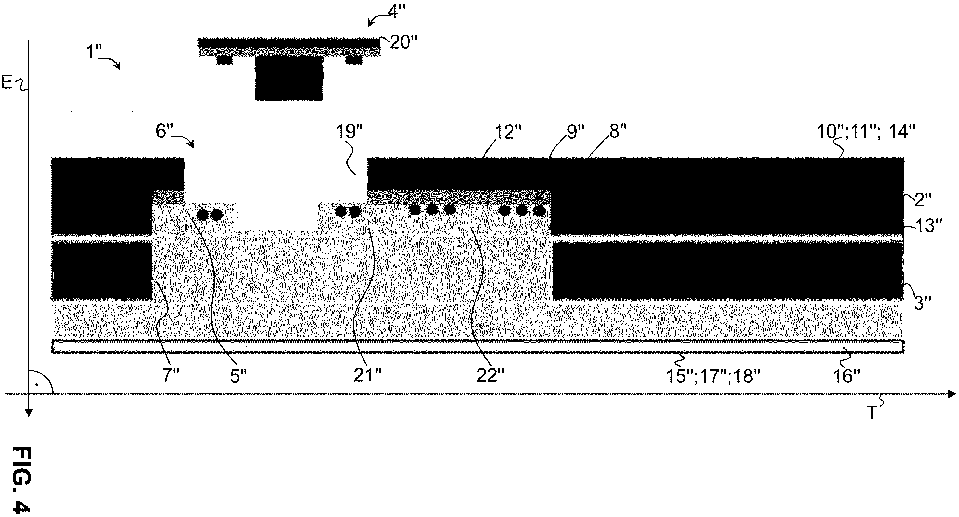

Figures 1 to 2d show a first embodiment of the data carrier 1, figures 3a to 3d depict a second embodiment of a data carrier 1', and figure 4 depict a third embodiment of a data carrier 1". As follows from these figures, the data carriers 1, 1', 1" of all embodiments comprise a first metallic layer 2, 2', 2", an electronic module 4, 4', 4", an antenna 5, 5', 5" being in connection with the electronic module 4, 4', 4", and a second metallic layer 3, 3', 3". The second metallic layer 3, 3', 3" is arranged after the first metallic layer 2, 2', 2" with respect to an extension direction E. The extension direction E extends from a top side 14, 14', 14" of the data carrier 1, 1' 1" towards a bottom side 15, 15', 15" of the data carrier 1, 1', 1".

As readily follows from these figures, the data carrier 1, 1', 1" corresponds in each case to a multi-layer structure wherein layers are arranged above one another with respect to the extension direction E. The top side 14, 14', 14" of the data carrier 1, 1', 1" is provided by the uppermost layer, which corresponds here to the first metallic layer 2, 2', 2". The bottom side 15, 15', 15" of the data carrier 1, 1', 1" corresponds to the lowermost layer, which corresponds here to an overlay 16, 16', 16", here a PVC overlay. The top side 14, 14', 14" of the data carrier 1, 1', 1" is defined by a top surface 10, 10', 10" of the data carrier 1, 1', 1", which is provided by a top surface 11, 11', 11" of the first metallic layer 2, 2', 2". Likewise, the bottom side 15, 15', 15" of the data carrier 1, 1', 1" is defined by a bottom surface 17, 17', 17" of the data carrier 1, 1', 1", which is provided by a bottom surface 18, 18', 18" of the overlay 16, 16', 16". It should be noted here that the first metallic layer 2, 2', 2" forms the outermost layer of the data carrier 1,1', 1", that is, there is no overlay or the like arranged on the top surface 11, 11', 11" of the first metallic layer 2, 2', 2".

As follows from figures 1, 2a, 2b, 3a, 3b and 4, the first metallic layer 2, 2', 2" is a continuous metallic layer delimiting a recess 6, 6', 6", wherein the first metallic layer 2, 2', 2" comprises just the said recess 6, 6', 6" and does not comprise any slits or the like that extend into the first metallic layer 2, 2', 2". Furthermore, the first metallic layer 2, 2', 2" has the shape of a plate comprising flat or even surfaces. The same applies to the second metallic layer 3, 3', 3", which is plate-shaped and flat or even as well. The electronic module 4, 4', 4" is partially arranged within said recess 6, 6', 6". To this end a size of the recess 6, 6', 6" essentially corresponds to a size of the electronic module 4, 4', 4" in the region of the arrangement of the electronic module 4, 4', 4" within the recess 6, 6', 6". In fact, the first metallic layer 2, 2', 2" completely surrounds the electronic module 4, 4', 4" in the region of its arrangement in the recess 6, 6', 6" and when seen along a circumferential direction of the electronic module 4, 4', 4". The region of arrangement of the electronic module 4, 4', 4" in the recess 6, 6', 6" corresponds here to an upper part of the electronic module 4, 4', 4". In fact, in the depicted example said upper part of the electronic module 4, 4', 4" comprises a pattern of metal contacts that are configured to electrically connect to the electronic module 4, 4', 4" to an external reader. Hence, in the depicted examples the data carrier 1, 1', 1" corresponds to a dual interface smart card or combi-card that is configured to connect its electronic module 4, 4', 4" to an external reader by means of a contact-based connection via the metal contacts as well as contactless via the antenna 5, 5', 5". The antenna 5, 5', 5" preferably corresponds to an RFID antenna. The electronic module 4, 4', 4" preferably corresponds to an RFID module.

The first metallic layer 2, 2', 2" of all embodiments can be electrically conductive or electrically non-conductive. The second metallic layer 3, 3', 3" of all embodiments however is electrically conductive in any case. Whereas the first metallic layer 2, 2', 2" can be for decoration purposes, the second metallic layer 3, 3', 3" is coupled to the antenna 5, 5', 5" and enhances a performance of the antenna 5, 5', 5". Although not depicted in the figures, the first metallic layer 2, 2', 2" may comprise at least one personalization element on and/or in its top surface 11, 11', 11". The personalization element can be an image and/or an alphanumeric character and is preferably a print such as an inkjet print or a laser drilling.

When seen from the top side 14, 14', 14" the data carrier 1, 1', 1" consists of the first metallic layer 2, 2', 2" and the electronic module 4, 4', 4" being arranged within the recess 6, 6', 6" of the first metallic layer 2, 2', 2". Since the size of the recess 6, 6', 6" of the first metallic layer 2, 2', 2" corresponds to the size of the electronic module 4, 4', 4" in its upper part, only a top surface of the electronic module 4, 4', 4" is left uncovered by the first metallic layer 2, 2', 2". Again in other words, an inner surface 19, 19', 19" of the first metallic layer 2, 2', 2" that delimit the recess 6, 6', 6" of the first metallic layer 2, 2', 2" are arranged immediately adjacent to a circumferential surface 20, 20', 20" of the electronic module 4, 4', 4" in its upper region.

As furthermore follows from the figures, an area expansion of the first metallic layer 2, 2', 2" corresponds to an area expansion of the data carrier 1, 1', 1" with respect to a transverse direction T running perpendicularly to the extension direction E. In other words, a size of the first metallic layer 2, 2', 2" corresponds to a size of the data carrier 1, 1', 1" with respect to the transverse direction T. Again in other words, the first metallic layer 2, 2', 2" extends until an outer edge of the data carrier 1, 1', 1" and is not, for instance, provided only regionally in the data carrier 1, 1', 1".

As further follows from figures 1, 2c, 2d, 3c, 3d and 4, also the second metallic layer 3, 3', 3" comprises a recess 7, 7', 7". A slit 25, 25', 25" extends from an outside of the second metallic layer 3, 3', 3" into the recess 7, 7'. 7" of the second metallic layer 3, 3', 3". A size of the recess 7, 7', 7" of the second metallic layer 3, 3', 3" with respect to the transverse direction T is at least the size of the antenna 5, 5', 5" with respect to the transverse direction T, and in the depicted examples is slightly larger than the size of the antenna 5, 5', 5". Furthermore, the recess 7, 7', 7" of the second metallic layer 3, 3', 3" and the antenna 5, 5', 5" are arranged essentially congruent with respect to the extension direction E. That is, the recess 7, 7', 7" of the second metallic layer 3, 3', 3" is arranged at a position that corresponds to the position of the antenna 5, 5', 5" with respect to the extension direction E. In other words, the second metallic layer 3, 3', 3" does not cover or overlie the antenna 5, 5', 5" with respect to the extension direction E and when seen from the top side 14, 14', 14" of the data carrier 1, 1', 1" towards the bottom side 15, 15', 15" of the data carrier 1, 1'. Moreover, in the first embodiment depicted in figures 1 to 2d and in the second embodiment depicted in figures 3a to 3d, the antenna 5, 5' is arranged within the second metallic layer 3, 5', namely within the recess 7, 7' of the second metallic layer 3, 3'.

Furthermore, in the first embodiment depicted in figures 1 to 2d, two antenna pads 23 are arranged in said recess 7 of the second metallic layer 3 as well. This is in contrast to the data carrier 1' depicted in figures 3a to 3d, which differs from the first embodiment depicted in figures 1 to 2d in that the antenna pads 23' are arranged in another recess 24' of the second metallic layer 3'.

In the third embodiment depicted in figure 4, the antenna 5" is arranged within the first metallic layer 2", namely within a further recess 8" of the first metallic layer 2". As best seen in figure 4, said further recess 8" of the first metallic layer 2" is larger than the recess 6" of the first metallic layer 2" within which the upper part of the electronic module 4" is arranged in. In addition, the recess 6" within which the upper part of the electronic module 4" is arranged in can be said to merge into the further recess 8" within which the antenna 5" is arranged in. In other words, the recess 6" of the fist metallic layer 2" within which the upper part of the electronic module 4" is arranged in opens into the further recess 8" of the first metallic layer 2" within which the antenna 5" is arranged in when seen along the extension direction E. In this embodiment there is another further recess 9" formed in the first metallic layer 2", namely a further recess 9" that is arranged between the recess 6" the upper part of the electronic module 4" is arranged in and the further recess 8' within which the antenna 5" is arranged in when seen along the extension direction E. For the sake of clarity, this further recess 9" is called here intermediate recess. The intermediate recess 9' and the further recess 8" the antenna 5" is arranged are entirely congruent with respect to the extension direction E. As such, the further recess 8" and the intermediate recess 9" can be said to form one common recess. The antenna 5, 5', 5" of all data carrier embodiments is arranged within a layer of polymer 21, 21', 21", here in a PVC layer. As such, the antenna 5, 5', 5" being arranged within the layer of polymer 21, 21', 21" can be referred to as insert element 22, 22', 22". The data carrier 1, 1', 1" of all embodiments comprises at least one shielding element 12, 12', 12'a, 12" that is configured to shield the antenna 5, 5', 5" and the electronic module 4, 4', 4" from magnetic fields. Here, said shielding element 12, 12', 12'a, 12" is a nickel-iron soft ferromagnetic alloy such as mu-metal.

In the first embodiment depicted in figures 1 to 2d, the shielding element 12 is arranged between the first metallic layer 2 and the second metallic layer 3 with respect to the extension direction E. Furthermore, the shielding element 12 is in indirect contact with the first metallic layer 2, the second metallic layer 3, and the insert element 22 comprising the antenna 5 via adhesive elements 13. The adhesive elements 13 correspond to layers of an adhesive such as glue being arranged on a top surface and an opposed bottom surface of the insert element 22. Moreover, an area expansion or size of the shielding element 12 corresponds to an area expansion or size of the first metallic layer 2 with respect to the transverse direction T. In particular, the insert element 22 and the first metallic layer 2 are arranged congruent to one another with respect to the extension direction E. Furthermore, the size of the shielding element 12 is at least the size of the antenna 5 with respect to the transverse direction T. In fact, in the depicted embodiment the size of the shielding element 12 exceeds the size of the antenna 5 with respect to the transverse direction T.

In contrast to the first embodiment, in the second embodiment depicted in figures 3a to 3d a shielding element 12'a is arranged in the recess 7' of the second metallic layer 3' that furthermore also comprises the antenna 5' as well as in the slit 25'. To this end the shielding element 12'a is arranged before the antenna 5' when seen along the extension direction E extending from the top side 14' of the data carrier 1' towards the bottom side 15' of the data carrier 1'. Moreover, as mentioned earlier and as follows from figures 3c and 3d, a further recess 24' is provided in the second metallic layer 3', wherein said further recess 24' merges into the recess 7' of the second metallic layer 3' the antenna 5' is arranged in. Said further recess 24' does not comprise a shielding element. However, as mentioned and as follows from figure 3d, two antenna pads 23' are arranged within this further recess 24'. Said further recess 24' can also be referred to as dip. Any other explanations made with reference to the embodiment depicted in figures 1 to 2d likewise apply to the second embodiment depicted in figures 3a to 3d.

In the third embodiment depicted in figure 4, the shielding element 12" is arranged within the first metallic layer 2", namely within the intermediate recess 9" of the first metallic layer 2" mentioned earlier. Furthermore, the top surface of the shielding element 12" is in direct contact with the first metallic layer 2" and the bottom surface of the shielding element 12" is in direct contact with the top surface of the insert element 22" comprising the antenna 5". In addition, in this third embodiment, the size of the shielding element 12" is at least the size of the antenna 5" with respect to the transverse direction T.

In the manufacturing of the data carriers 1, 1', 1" discussed above it is preferred to attach the metallic layers 2, 2', 2"; 3, 3', 3" and the shielding elements 12, 12', 12'a, 12" to one another optionally via an adhesive element, to provide the PVC overlay, and to adhesively melt them together while applying pressure. Thereafter, it is preferred to assemble the electronic module 4, 4', 4" on a PVC insert, to arrange said electronic module 4, 4', 4" into a cavity of the data carrier 1, 1', 1", and to electrically connect the electronic module 1, 1', 1" to the antenna 5, 5', 5", for instance via a conductive glue such as silver glue or solder paste.

### LIST OF REFERENCE SIGNS

| | | | |
|---|---|---|---|
| 1, 1', 1" | data carrier | 15, 15', 15" | bottom side |
| 2, 2', 2" | first metallic layer | 16, 16', 16" | overlay |
| 3, 3', 3" | second metallic layer | 17, 17', 17" | bottom surface |
| 4, 4', 4" | electronic module | 18, 18', 18" | bottom surface |
| 5, 5', 5" | antenna | 19, 19', 19" | inner surface |
| 6, 6', 6" | recess | 20, 20', 20" | circumferential surface |
| 7, 7', 7" | recess | 21, 21', 21" | polymer layer |
| 8" | recess | 22, 22', 22" | insert element |
| 9" | recess | 23, 23' | antenna pad |
| 10, 10', 10" | top surface | 24' | recess |
| 11, 11', 11" | top surface | 25, 25', 25" | slit |
| 12, 12', 12'a, | | | |
| 12" | shielding element | E | extension direction |
| 13 | adhesive element | T | transverse direction |
| 14, 14', 14" | top side | | |

## Claims

1. A data carrier (1, 1', 1") comprising:
- at least a first metallic layer (2, 2', 2");
- at least one electronic module (4, 4', 4");
- at least one antenna (5, 5', 5"); and
- at least a second metallic layer (3, 3', 3"),
wherein the second metallic layer (3, 3', 3") is arranged after the first metallic layer (2, 2', 2") with respect to an extension direction (E), and
wherein the antenna (5, 5', 5") is in connection with the electronic module (4, 4', 4"),
**characterized in that** the first metallic layer (2, 2', 2") is a continuous metallic layer delimiting a recess (6, 6', 6"), and wherein the electronic module (4, 4', 4") is at least partially arranged within said recess (6, 6', 6").

2. The data carrier (1, 1', 1") according to claim 1, wherein a size of the recess (6, 6', 6") essentially corresponds to a size of the electronic module (4, 4', 4") in the region of the arrangement of the electronic module (4, 4', 4") within the recess (6, 6', 6"), and/or
wherein the first metallic layer (2, 2', 2") completely surrounds the electronic module (4, 4', 4") at least in the region of the arrangement of the electronic module (4, 4', 4") within the recess (6, 6', 6") when seen along a circumferential direction of the electronic module (4, 4', 4").

3. The data carrier (1, 1', 1") according to any one of the preceding claims, wherein an area expansion of the first metallic layer (2, 2', 2") corresponds to an area expansion of the data carrier (1, 1', 1") with respect to a transverse direction (T) running perpendicularly to the extension direction (E).

4. The data carrier (1, 1', 1") according to any one of the preceding claims, wherein the data carrier (1, 1', 1') comprises a top surface (10, 10', 10"), and wherein a top surface (11, 11', 11") of the first metallic layer (2, 2', 2") provides the top surface of the data carrier (1, 1', 1").

5. The data carrier (1, 1', 1") according to any one of the preceding claims, wherein the second metallic layer (3, 3', 3") comprises a recess (7, 7', 7"),
wherein a size of the recess (7, 7', 7") of the second metallic layer (3, 3', 3") with respect to a transverse direction (T) running perpendicularly to the extension direction (E) is at least the size of the antenna (5, 5', 5") with respect to the transverse direction (T), and
wherein the recess (7, 7', 7") of the second metallic layer (3, 3', 3") and the antenna (5, 5', 5") are arranged essentially congruent with respect to the extension direction (E).

6. The data carrier (1, 1', 1") according to any one of the preceding claims, wherein the antenna (5") is at least partially arranged within the first metallic layer (2"), in particular within a further recess (8") of the first metallic layer (2"), or
wherein the antenna (5, 5') is at least partially arranged within the second metallic layer (3, 3'), in particular within the recess (7, 7') of the second metallic layer (3).

7. The data carrier (1, 1', 1") according to any one of the preceding claims, further comprising at least one shielding element (12, 12', 12'a, 12") that is configured to shield the antenna (5, 5', 5") and/or the electronic module (4, 4', 4") from magnetic fields, and
wherein the shielding element (12, 12', 12'a, 12") preferably is a nickel-iron soft ferromagnetic alloy such as mu-metal.

8. The data carrier (1, 1', 1") according to claim 7, wherein the shielding element (12, 12') is arranged between the first metallic layer (2, 2') and the second metallic layer (3, 3') with respect to the extension direction (E), or
wherein the shielding element (12") is at least partially arranged within the first metallic layer (2"), preferably within a further recess (9") of the first metallic layer (2'), and/or wherein the shielding element (12'a) is at least partially arranged within the second metallic layer (2'), preferably within the recess (7') of the second metallic layer (3).

9. The data carrier (1, 1') according to claim 7 or 8, wherein the shielding element (12") is in direct contact with the first metallic layer (2") and/or the second metallic layer, or
wherein the shielding element (12, 12', 12'a) is in indirect contact preferably via at least one adhesive element (13) with the first metallic layer (2, 2') and/or the second metallic layer (3, 3').

10. The data carrier (1, 1', 1') according to any one of claims 7 to 9, wherein an area expansion of the shielding element (12, 12') corresponds to an area expansion of the first metallic layer (2, 2') with respect to a transverse direction (T) extending perpendicularly to the extension direction (E), and/or
wherein a size of the shielding element (12, 12', 12") is at least the size of the antenna (5, 5', 5") with respect to a transverse direction (T) running perpendicularly to the extension direction (E).

11. The data carrier (1, 1', 1') according to any one of the preceding claims, wherein a thickness of the first metallic layer (2, 2', 2") with respect to the extension direction (E) is in the range 50 millimeter to 90 millimeter, particularly preferably between 53.98 millimeter to 85.6 millimeter, and/or
wherein a thickness of the second metallic layer (3, 3', 3") with respect to the extension direction (E) is in the range of 50 millimeter to 90 millimeter, particularly preferably between 53.98 millimeter to 85.6 millimeter.

12. The data carrier (1, 1', 1") according to any one of the preceding claims, wherein the first metallic layer (2, 2', 2") is electrically conductive or electrically non-conductive, and/or
wherein the second metallic layer (3, 3', 3") is electrically conductive, and/or wherein the first metallic layer (2, 2', 2") and/or the second metallic layer (3, 3', 3") comprise or consist of stainless steel.

13. The data carrier (1, 1', 1") according to any one of the preceding claims, wherein the first metallic layer (2, 2', 2") comprises a top surface (11, 11', 11"), and wherein at least one personalization element is provided on and/or in the top surface (11, 11', 11"), and
wherein the personalization element preferably is at least one image and/or at least one alphanumeric character, and/or
wherein the personalization element preferably is a print such as an inkjet print or a laser drilling.

14. A secure article comprising or consisting of at least one data carrier (1, 1', 1") as claimed in any one of the preceding claims, wherein the secure article preferably is a smart card.

15. A method of producing a data carrier (1, 1', 1"), preferably a data carrier (1, 1', 1") as claimed in any one of claims 1 to 13, wherein the method comprises the steps of:
- Providing at least a first metallic layer (2, 2', 2");
- Providing at least one electronic module (4, 4', 4");
- Providing at least one antenna (5, 5', 5"); and
- Providing at least a second metallic layer (3, 3', 3"),
wherein the second metallic layer (3, 3', 3") is arranged after the first metallic layer (2, 2', 2") with respect to an extension direction (E), and
wherein the antenna (5, 5', 5") is in connection with the electronic module (4, 4', 4"),
**characterized in that** the first metallic layer (2, 2', 2") is a continuous metallic layer delimiting a recess (6, 6', 6"), and wherein the electronic module (4, 4', 4") is at least partially arranged within said recess (6, 6', 6").
